# EUROPEAN PATENT APPLICATION

(11) **EP 1 758 283 A1**
(43) Date of publication of application: **28.02.2007**
(21) Application number: 06076037.8
(22) Date of filing: 28.02.2001
(51) Int. Cl.: H04H 1/00, H04H 9/00, H04N 7/16, H04L 29/06, G09B 5/06

(54) **System and method for providing interactivity with a television program**

(30) Priority: 01.03.2000 GB 0005018; 12.06.2000 GB 0014320; 24.10.2000 US 694365
(62) Divisional of application: 01909966.2
(71) Applicant: Hookham-Miller, Peter Ernest, London EC2Y 5BN (GB)
(72) Inventor: Hookham-Miller, Peter Ernest, London EC2Y 5BN (GB)
(74) Representative: Ruuskanen, Juha-Pekka

(57) **Abstract**

A system for presenting television programs, comprising a television terminal for displaying the television program based on a program signal; a program signal provision system adapted to provide the television terminal with the program signal; a data communication system; a management unit connected to the data communication system, said management unit comprising a database for storing personalised information associated with a viewer of the television program, and a processor adapted to process data associated with the television program; and a portable user device adapted to be operable by the viewer while viewing the television program, the portable user device comprising a communication module enabling data communication over a wireless interface between the portable user device and the data communication system, whereby the portable user device and the management unit are adapted to communicate data that associates with the television program over said wireless interface and data communication system at the same time when the television program is presented to the viewer based on the program signal provided through the program signal provision system.

## Description

The present invention relates to presentation of programmes, and in particular, but not exclusively, to provision of further content and/or interactivity for users of program presentation terminals by means of a data communication system.

Broadcasting systems for transmitting programs, such as TV or radio programmes, to be represented by a receiver apparatus to the users ("audience") thereof are known. For example, the skilled person is aware of the basic principle and operation of a television program broadcasting system and the concept of displaying television programmes to the viewers of television sets, and therefore the operation thereof will not be explained in detail. It is sufficient to note that the broadcasting systems include systems that are based on wireless program signal transmission, satellite transmission and cable transmission and so on and that the program signal transmission may comprise transmission of analogue or digital signals and/or a combination of these.

The programmes may be transmitted as live transmissions or as recorded programmes. The live transmissions show an event, such as a football game, news or a lottery draw, substantially in real-time for the viewers. The recorded programmes have been prepared beforehand and will be transmitted and shown later on to the viewers at an appropriate time. Recorded programs may also be represented from a storage media, such as video or audio tape, compact disk (CD) or digital video disk (DVD) e.g. by means of a video player, video disk or CD player or a tape player. The recording may contain a program that has been broadcast earlier or a recording that has been prepared to be distributed e.g. through video shops or record stores.

The programmes can also be divided in several categories, such as news, sport, game shows, entertainment programs, comedies, drama series, movies, children programmes, educational programmes, documentaries, and so on. For example, the purpose of the educational programmes is to help the viewers thereof to learn new things and to develop their knowledge and/or skills. The educational programmes may be viewed by various groups of people, such as small children or schoolchildren, students, adults, or anybody else wishing to learn new things. The game shows may include, for example, entertainment games with no prices or only modest prices and gambling, such as lottery or betting.

Programmes, such as documentaries, educational programmes and/or game shows, may include various stimulating features or events, such as questions to be answered or special tasks to be performed by the viewers or listeners or other events to which the remote audience may wish to give feedback or from which the viewers may wish to receive more information. Individuals watching dramas or comedies might wish to have influence over the story and/or the end of the story. People watching documentaries may wish to receive some further information of the facts and/or background and so on.

It is believed that interactivity may make the programmes in general more interesting and/or increase the efficiency of the educational programmes. For example, the viewer of a TV program may wish to have the possibility to respond to questions, events or other stimulating features of the programmes they are currently viewing. The conventional one-way broadcasting systems, however, may not be able to provide feasible, easy-to-use and affordable interactivity to as the remote audience might wish to have.

The viewer (or listener) may also wish to receive further content that associates with the program he is viewing. The content could be any associating information such as further information of the events or characters of the program, background information, information of the rules of a game that is to be presented and so on. The further content could also comprise views from another angle(s), replay of certain events, additional views or parts of the program not presented by the broadcasting system and so on.

The previous proposals have suggested use of public switched telecommunication networks (PSTN) or other conventional telephone networks for interaction with the program. In accordance with the earlier proposals the viewer or listener needs to have a telephone in order to make a telephone call to the television studio. The viewer may also contact the studio through a personal computer (PC) connected to the Internet to give his answer or give some other feedback or to fetch further information. The broadcasting systems in general may not have been enabled to provide any tailored communication towards selected users other than by a telephone (or Internet) call between the viewer and e.g. the presenter of the program through the public telephone network. Some viewers may find it inconvenient to make a call to a particular number provided by the program. Although the Internet may be used for the communication, not everyone has a home PC that is connected to the Internet. A percentage of people may also find the PCs and Internet subscriptions too expensive and/or difficult to install and/or use and/or operate.

The previous proposals may thus not have been able to deliver a cost-effective solution for interaction with the broadcasting system, such as for interactive learning or for game shows or for fetching further content that associates with the program. This has been held back by lack of solutions offering an affordable and workable solution for providing a communication channel towards the broadcasting system or any other source of further content. The present proposals may not be able to provide personalised interactivity and/or further content to individual users in a satisfactory manner.

The users may also wish to have mobility while viewing or listening to the program. The mobility may be restricted by a wired connection between a terminal that may be used for the interactive communication and the telecommunication system. Furthermore, the present arrangements may also provide only limited possibilities for providing interactivity and/or further content in association with recorded programs.

The embodiments of the present invention aim to address one or several of the above problems. The specific embodiments aim to provide tailored interactivity and/or further content to the users of a conventional program representation system by means of a user device that may communicate via a different communication media than what is used for the provision of the programs.

According to one aspect of the present invention there is provided a method for presenting a program for a user. In the method information that associates with the user is stored in a remote management unit, preferably to a database thereof. A program representation device is provided with a program signal by means of a program signal broadcasting system, whereafter the program is presented to the user based on the program signal. A predefined event is monitored for, and upon detection thereof, data is transported between the remote management unit and a user device operable by the user while experiencing the program. The transportation occurs over a data network and a wireless data communication link between the data network and the user device. The data that associates with the program is personalised based on said stored information.

According to another aspect of the present invention there is provided a method for presenting a program for a user. In the method information that associates with the user is stored in a remote management unit. A program signal is generated by means of replaying apparatus and subsequently provided to a program representation device. The program is then represented to the user based on the program signal. A predefined event is monitored for and in response to detection of the predefined event, data is transported between the remote management unit and a user device operable by the user while experiencing the program. The data transportation occurs over a data network and a wireless data communication link between the data network and the user device. The data associated with the program is personalised based on said stored information.

According to another aspect of the present invention there is provided a method for providing interactivity for a viewer of a television program that has been provided by a television system. The television program is displayed to the viewer based on a signal from the television system. The method comprises further a step of generation of a packet data message that is to be transmitted between a remote management unit and a handheld controller operable by the viewer while viewing the program. The management unit is connected to a packet switched data communication system and comprises processor means for processing and storage means for storing information that associates with the viewer. The management unit also stores information that associates with the program. The handheld controller is associated with a wireless module enabling a wireless data communication link between the controller and the packet switched communication network. In accordance with a further method step the packet data message is transmitted between the wireless module and the packet switched telecommunication system via the wireless data communication link, the packet data message and the signal from the television system being transported are separate communication systems.

According to another aspect of the present invention there is provided a system for presenting a program. The system comprises a program representation terminal for representing the program to a user and a broadcasting system for providing the program to the program representation terminal. A data communication network is also provided. A remote management unit is connected to the data communication network, said remote management unit comprising a processor for processing data that associates with the program and a storage unit for storing information that associates with the user. Said processor is adapted to personalise data that associates with the program based on the information that associates with the user. The system comprises further a user device operable by the user while experiencing the program. The user device is adapted for communication over the data network by means of a wireless data communication link between the data communication network and the user device and to present information to the user based on data that is received via the wireless data communication link from the remote management unit while the user is experiencing the program.

According to still another aspect of the present invention there is provided a system for presenting a program. The system comprises a program representation terminal for representing the program to a user and program replaying apparatus for providing the program to the program representation terminal. A packet data communication network is also provided. A remote management unit is connected to the packet data communication network, said remote management unit comprising a processor for processing data that associates with the program and a storage unit for storing information that associates with the user. Said processor is adapted to personalise data that associates with the program based on the information that associates with the user. A user device that is operable by the user while experiencing the program is also provided. The user device is adapted for communication over the packet data network by means of a wireless data communication link between the data communication network and the user device and to present information to the user based on data that is received via the wireless data communication link from the remote management unit while the user is experiencing the program.

According to yet another aspect of the present invention there is provided a system for presenting television programs. The system comprises a television terminal for displaying the television program based on a program signal and a program signal provision system adapted to provide the television terminal with the program signal. A packet data communication system is provided for data communication. A management unit is connected to the packet switched data communication system. Said management unit comprises a database for storing personalised information associated with a viewer of the television program, and a processor adapted to process data associated with the television program. The system comprises further a portable user device adapted to be operable by the viewer while viewing the television program. The portable user device comprises a communication module enabling data communication over a wireless interface between the portable user device and the packet data communication system. The portable user device and the management unit are adapted to communicate data that associates with the television program over said wireless interface and packet data communication system at the same time when the television program is presented to the viewer based on the program signal provided through the program signal provision system.

According to yet another aspect of the present invention there is provided a portable user device operable by a viewer of a television program while viewing the program presented by a television terminal adapted to receive a television signal from a television system. The user device comprises a communication module enabling data communication over a wireless interface between the portable user device and a packet data communication system, said packet data communication system being an independent system from the television system. The user device comprises also a controller that is adapted to process data received from or to be transported to a remote management unit that is connected to the packet data communication system. The portable user device is adapted to communicate data that associates with the television program and has been personalised based on the personal characteristics of the viewer over said wireless interface at the same time when the television program is presented to the viewer.

In a more specific embodiment of the invention, the data transportation may originate from the remote unit. Information that associates with the program may also be stored in the remote unit. Data may also or alternatively be transported from the user device. A broadcasting system or apparatus for replaying recorded programs may provide the representation device with the program signal. The user device may comprise a portable or handheld controller. Wireless communication may be arranged between the controller and other apparatus of the system.

The packet data communication network is preferably based on one of the third generation telecommunication standards. The wireless link may comprise a short range radio link. The wireless link may operate in an unlicensed radio frequency band. The wireless link may employ frequency hopping, wherein the frequency may be changed between subsequent data packets.

The data transported over the wireless link may comprise control instructions for the user device, additional information that associates with the program, and/or further content that associates with the program. The data transportation between the user device and the remote management unit may provide interaction between a viewer of a television program and the television system.

The program may include at least one event to which the user may react, e.g. by inputting a response into the user device. The user device may present an audio message and/or a visual message based on data transported from the remote unit. Voice messages may be transported based on the voice over internet protocol (VOIP). The data transportation may be triggered by a predefined event in the program or based on monitoring of a time-code that associates with the recording media used for storing the program. The user may also trigger the data transportation by inputting a speech message into the controller or by pressing an appropriate key or keys. At least one element of the user device may be operated based on data received from the remote management unit.

Data to be transported to the user device is preferably personalised before transportation based on the information stored in a database of the remote management unit. The user may be enabled to modify the information stored in the database.

The embodiments of the invention may provide a cost effective way for enabling e.g. the viewer of a TV programme to interact with it and/or to receive further content and associated information that associates with the program. No apparatus may be required to be provided at the premises where the program is experienced for the provision of linking and or synchronisation between the program and the preferably two-way communication by the user. The embodiments may thus enable an easy and/or affordable interaction with a program. The embodiments may be used in any home today with the existing television or radio receiver sets. The embodiments may enable provision of selective and/or tailored data to the users. The tailoring can be based on personal characteristics of individual users of the system. The embodiments may make programs that are based on interactive learning and/or children programs and/or gaming programs and the like more interesting for the viewers. The embodiment may also enable more feasible and affordable real-time communication between the users and the program service providers than in the conventional solutions.

For better understanding of the present invention, reference will now be made by way of example to the accompanying drawings in which:
Figure 1 shows one embodiment of the present invention;
Figure 2 is a flowchart illustrating an embodiment of the present invention;
Figure 3 shows further embodiments of the present invention;
Figure 4 shows an embodiment wherein data is communicated via a cellular network;
Figure 5 shows an architecture for a management unit in accordance with an embodiment of the present invention; and
Figure 6 is an example of an information record stored in the management unit of Figure 5.

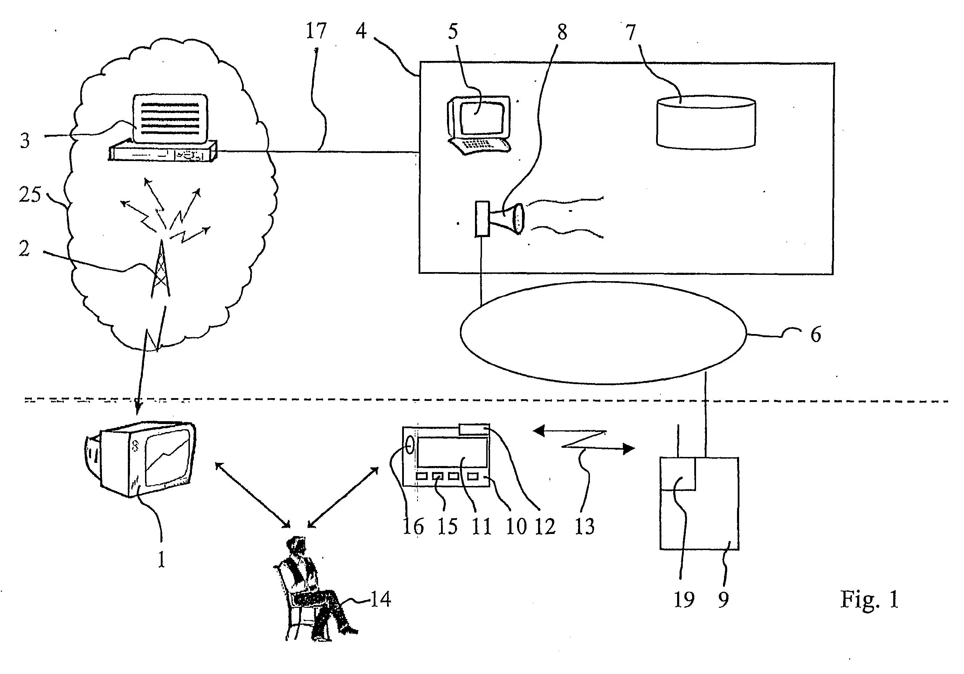

Reference is made to Figure 1 which shows an embodiment of the present invention that relates to presentation of TV programs that are transmitted by means of a public television broadcast network 25. The television network 25 can be of any type, such as a conventional analogue network or a digital television network. The network 25 includes a wireless transmitter or antenna 2 for transmitting the television signal towards television apparatus 1. It should be appreciated that instead of distributing the television signal through antennae, the signal may be distributed through other media, such as cable or satellite subscriptions (not shown). It should also be appreciated that although only one antenna and TV set is shown for clarity reasons, the number of the antennae and TV sets connected to the TV network is typically much higher.

The television network system is also provided with a broadcasting apparatus 3 for the provision of the TV program signal to the antennae. It should be understood that the broadcasting apparatus typically includes various different elements in the TV studio and elsewhere in the television system. The apparatus that is required for the provision of the television program signal to the antenna 2 and the operation thereof is known and does not form a part of the invention as such, and will thus not be described in more detail.

The Figure 1 system includes further a data processing entity or management unit 4 comprising a processor facility 5 and storage means or database 7. The database 7 is provided for storing information on the individual users 14 of the system. That is, each of the users of the system may be individually registered onto the management unit 4 so that a personalised experience may be tailored for each user based on the information stored in the database. The information stored in the database 7 may be used e.g. to personalise communication towards individual users. For example, it is possible to personalise additional content that associates with a particular program, e.g. such that different viewers with different interests will receive different additional content.

In the simplest form the user related information may comprise indication that the user is allowed to fetch data from and/or transmit data to the management unit 4. The database 7 or a separate database is also preferably used for storing information that associates with the programs, such as additional content or background information. The management unit or 'hub' 4 may communicate via a connection 17 with one or several elements of the television system 25, although this is not a necessity in all embodiments.

The management unit 4 is connected to appropriate gateway apparatus 8 for enabling communication via a packet data communication network 6. For example, the management unit 4 may be provided with voice over IP (Internet Protocol) gateway apparatus for enabling voice communication via a packet switched Internet protocol (IP) based data network. The skilled person is familiar with various possible gateway arrangements for connecting a data processing entity to a data network, and therefore they are not discussed in more detail.

The management unit 4 may be operated and run by an independent service provider providing interactivity and/or other content services. The management unit 4 may alternatively be controlled by the TV company itself. The presenter of a program and/or the production team of a TV program may also have a connection to the management unit 4 so that they may communicate with the viewers through the interaction system and/or control the communication between the viewer i.e. the user 14 and the management unit 4, as will be explained later.

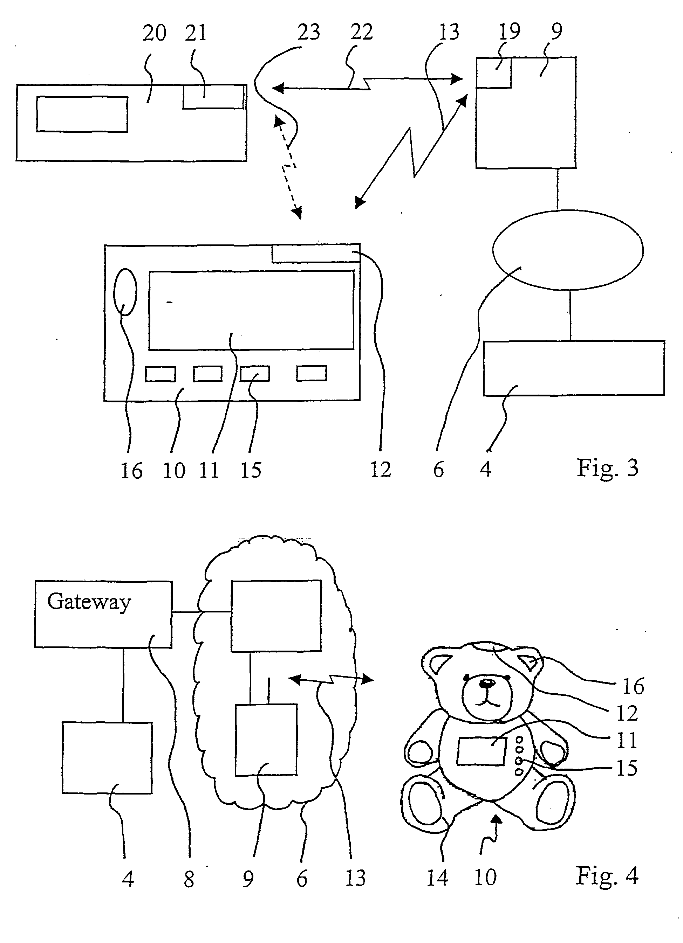

The data communications network 6 may comprise any network that is capable of providing data transportation services for the management unit 4. The communication system provides preferably broadband communication services for the subscribers thereof. The broadband services is preferably provided to home users through a data communication system that is based e.g. on one of the third generation (3G) telecommunications standards. Examples of the 3G standards will be discussed in more detail later with reference to Figure 4. The packet data network may also be based on technologies such as an integrated services digital network (ISDN) or an asynchronous data subscriber line (ADSL). A data communication system includes typically various elements, such as one or more network controllers, exchanges and/or routers (not shown for clarity reasons) and one or more gateways 8.

A home base station 9 is shown to be connected to the data communication network 6, and thus also to the management unit 4. The connection between the management unit 4 and the base station 9 may be based on any appropriate data transport protocol, such as the Internet Protocol (IP). The base station 9 is adapted to interface the data network 6 and one or several user devices in the location of the base station 9. The location can be e.g. a house, a suburban housing area or a block of flats.

The user 14 is provided with a portable user device. The user device may comprise a portable i.e. handheld on-site controller 10 that the user 14 may see and operate while watching the TV apparatus 1. The controller 10 provides an interactive remote station that may communicate over a wireless interface 13 with the base station 9. To enable this, the controller 10 of Figure 1 is provided with a radio communication module 12 that is enabled to have a wireless high speed data connection with the base station 9. Thus the data network 6 and the base station 9 are enabled to provide broadband communication between the management unit 4 and the portable controller 10.

In case a public data communication network that provides wireless services for the user thereof is used, the user device 10 may be adapted to communicate directly with a base station of the data network. This embodiment will be described in more detail with reference to Figure 4. Alternatively, the wireless link 13 between the controller 10 and the base station 9 may be based on a communication protocol that is capable of providing a local low power wireless service. The low power wireless service may be different from the standard and protocols of the data network 6. The low power wireless link may be provided by a short range radio link (SRRL) between any two or more stations that are close enough to each other. The short range low power wireless services operate typically in a unlicensed frequency range, such as in frequencies over 2 GHz. For example, in the USA unlicensed ISM bands 2.4 to 2.5. GHz and 5.725 to 5.875 GHz are permitted.

The controller 10 and the base station 9 are provided with appropriate wireless communication modules 12 and 19, respectively such that duplex traffic between the two stations is enabled. The wireless modules 12 and 19 are preferably based on standardised low power radio service components. It should be appreciated that although this description describes a base station comprising a wireless module, the base station 9 may in its simple form constitute of a wireless transmitter and/or receiver and means for interfacing the transmitter and/or receiver to the data network 6.

An appropriate low power wireless service that may be used in the embodiments is based on a so called Bluetooth™ protocol. The term Bluetooth™ refers to a technology specification by the Bluetooth special interest group (SIG) for small factor, low-cost, short range radio links (SRRL) between various devices, such as mobile stations, portable personal computers, and other portable devices. Bluetooth™ facilitates real-time voice and data transmissions. If the controller 10 is equipped with a Bluetooth™ wireless module 12, a connection may be established between the controller and the base station 9 that is also provided with a Bluetooth™ wireless module 19. The Bluetooth™ technology allows for a replacement of any cables that conventionally have connected devices to each other with a universal short range radio link. The wireless Bluetooth™ modules operate in an unlicensed ISM band at 2.4 GHz that is globally available. The connection may be established and maintained even when the controller 10 and the base station 9 are not within line of sight, e.g. are located in different rooms. The short range link may cover a radio service area of, for example, about 10 meters, but the range can also be extended to around 100 meters, e.g. by means of an amplifier.

The Bluetooth™ basement protocol is a combination of circuit and packet switching. Slots can be reserved for synchronised data packets. A data packet nominally covers a single slot, but can be extended to cover up to five slots, or even more. The Bluetooth™ specification defines a fast acknowledgement and frequency hopping scheme to improve the robustness of the wireless link and to combat interference and fading.
Bluetooth™ wireless modules are adapted to avoid interference from other signals by hopping to a new frequency after transmitting or receiving a data packet. The use of short data packets and fast hopping may also limit the impact of other devices such as microwave ovens or other receivers and/or transmitters. A shaped, binary FM modulation is applied to minimise the complexity of the transceiver of the wireless module.

The Bluetooth™ radio service can support an asynchronous data channel, up to three simultaneous synchronised voice channels or a channel which simultaneously supports asynchronous data and synchronised voice. The gross data rate of the present Bluetooth™ applications is 1MB per second. Each voice channel may support a 64 kb/s synchronous link. At present the asynchronous channel can support an asymmetric link of 721 kb/s in either direction while permitting 57.6 kb/s in the return direction, or a 432.6 kb/s symmetric link. A time division duplex scheme may be used for full duplex transmission. The network topology of the Bluetooth™ system may support both point-to-point and point-to-multipoint connections, thereby enabling communication between several devices at the same time.

The size of the Bluetooth™ wireless module is relatively small and typically comprises a single chip. A Bluetooth™ chip may comprise all necessary processors, radio part, interface means and so on. Since the chip is a standardised element, the implementation costs of the wireless controller 10 may be relatively low. The power consumption of a typical Bluetooth™ arrangement is also low. The fast frequency hopping scheme "enables robust radio links between the controller 10 and the base station 9.

The controller 10 may be provided with voice input/output means 16 and/or various trigger sensors in the body thereof. A graphics display 11 and selection buttons 15 may also be provided in the controller. The display 11 may be adapted to show still images or video images that are based on signals received via the wireless transmission from the base station 9. The display 11 may also comprise a so called touch screen function. The controller 10 may be IP enabled. The controller 10 may have a customised application loaded into it.

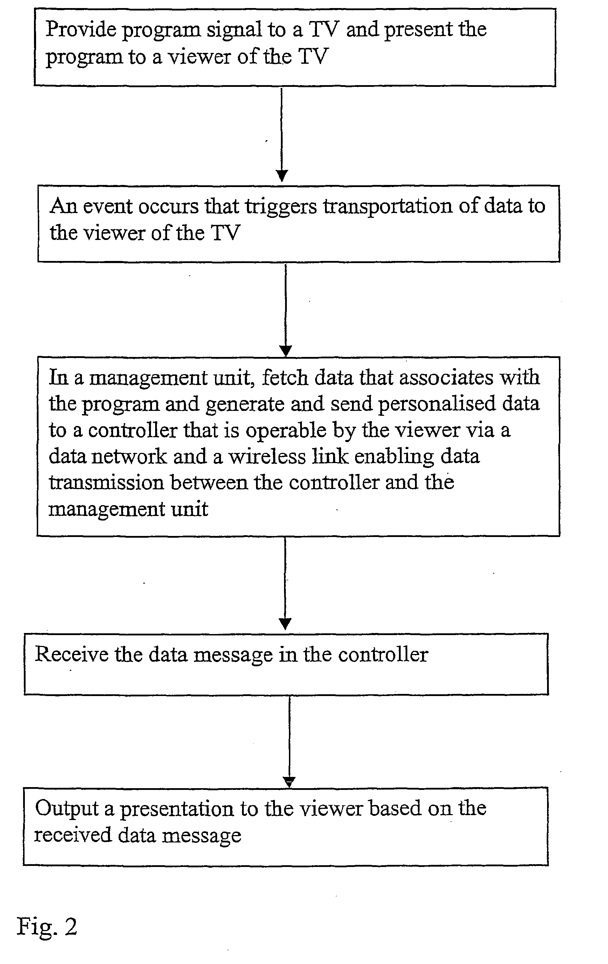

With reference now also to Figure 2, operation of an embodiment of the present invention is explained in more detail. The TV programme production company may create a program which make use of the interactive controller 10. The programme may be a recorded or live program and transmitted in a conventional fashion. The generation of messages to be communicated between the controller 10 and the management unit 4 may associate with predetermined events in the production. According to a preferred embodiment a time-code of the film constitutes an event that triggers signalling from the management unit 4 towards the controller 10. The progression of the program can be followed and/or the time-code detected by the element 3 of the broadcasting system 25. The element 3 may be used to generate and transmit a request for the management unit 4 over the connection 17 to transmit data towards the controller 10. According to a possibility the element 3 or the management unit 4 monitors for a predefined event, e.g. a predefined sound effect or visual effect in the program, and upon detection thereof initiates the data transmission. The sound effect detection or visual effect detection may be based on digital sound or image processing techniques. The triggering of the messaging may also be based on combination of several events, e.g. such that a time-code condition and a visual effect has to be met before any message is generated and/or transmitted or that it is enough that one event of several possible events is detected. The transmission of data from the management unit 4 may also be initiated upon receiving a request from the controller 10. The data that may be sent to the controller 10 may take, for example, the form of voice data, video data and control instruction data.

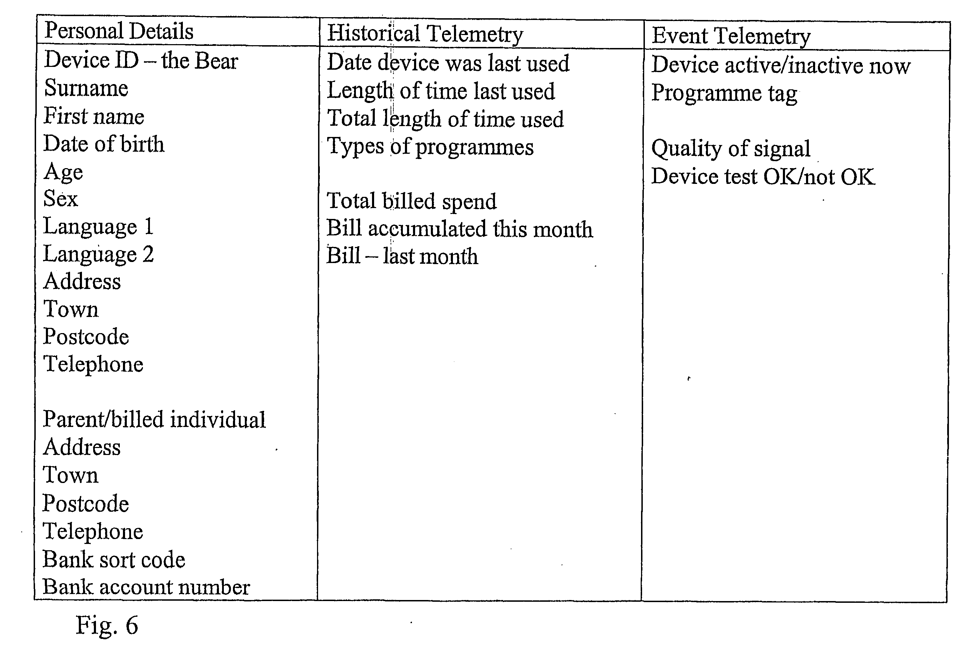

The user 14 may receive personalised content from the management unit 4 and may thus be provided with an enhanced and tailored television viewing experience. Each user may be personalised in the management unit or service provider portal based on information stored in the database 7 thereof. The personalised information may be obtained e.g. when a controller is purchased. The buyer may complete a registration form identifying the owner of the controller or the users of the controller (e.g. all members of a family). In this way, the controller and/or interaction can be personalised to each individual. One or more of the following criteria may be used as part of the personalisation process: first name; last name; date and/or place of birth; sex; colour of eyes; colour of hair; personal interests/preferences; hobbies; nationality; preferred language; address information; email address; telephone number; and so on. Even detailed health information, such as eyesight or information regarding difficulties in hearing, can be stored in the database, as this may be used e.g. when providing programs to special groups. Figure 6 illustrates a possible listing of personal details stored in the management unit.

The personal information can also be submitted e.g. by post, Internet, (e.g. through Hyper Text Mark-up Language HTML pages), telephone or personal visit to the provider of the interactive services or by any other appropriate way. This information will be stored in the database 7 and the controller is personalised to each viewer based on the stored information. The stored data may be used when predefined events in the program or a request by the controller trigger the procedure for data transmission to the controller.

The triggered message and personalisation data may be combined to form a "video event" or a "Sound Event". An example of the latter is a birthday song that is presented to a person on his/hers birthday. The generated event is sent to a gateway 8 where e.g. the sound file is converted using e.g. Voice Over IP protocol and transmitted over a data network 6 to the controller 10.

The user 14 may activate the controller 10 whilst watching a program. The user may input various information, such as his/hers identity, information regarding the channel he/she is watching and so on. This information may also be provided by the receiver apparatus, either via a connection with the controller 10 or base station 9. To enable the communication with the other devices in the household, the TV may be provided with a similar wireless module as the controller, or the communication may occur e.g. via a conventional infrared link. The controller may then generate and transmit a message to the management unit, and more particularly, to the processor 5 thereof. Based on the message from the controller 10 and/or information stored in the database 7, the processor 5 generates a content entity that is transported back to the controller and presented to the user 14 thereof.

According to an embodiment the controller is associated with a toy, such as a teddy bear 10 of Figure 4. It should be appreciated that in the following description any reference to Teddy 10 is also a reference to any portable on-site controller, whenever appropriate. When a toy, is not used as an interface towards the TV system, it can be played with in a normal manner. When a particular broadcast starts, the child may activate the toy e.g. by squeezing the toy's nose or by touching or pressing other predefined parts or activation means of the toy. The toy is activated, i.e. 'comes to life', and as the broadcast continues, the toy may ask questions in relation to the broadcast. The child may interact with the program by sending responses through the Teddy (e.g. by pressing one or several of the buttons thereof, by touching an element of the toy given to him/her by the program or simply by speaking to the toy). The answers may be verified by the management unit 4, and feedback may be given to the child regarding the correctness of the answers.

Sound messages may be output by one or more speakers built into the Teddy (for example, in the mouth of the teddy bear). The sound message may be based on the signal fed by the VoIP conversion. A microphone may also be built into the Teddy (e.g. in one or both ears 16) allowing the child to talk back. The input may again be encoded using VoIP and transmitted back to the control system 4, where a speech recognition software could interpret what has been said. The control system 4 may then generate an appropriate response.

In accordance with a further embodiment the design of the controller 10 is such that mechanical movement of at least some parts thereof are enabled. This may affect the amount of battery power required, but also adds to the over-all design. For example, if the controller is in a form of a toy, e.g. the Teddy, movement of the mouth, eyes, head, limbs and ears of the toy are all possible. The movement may be controlled by the management unit 4 via the data network. For example, the movements of the various elements of the Teddy bear may follow the story of the program, or give feedback to the child based on the responses he/she has given to the questions. It should be appreciated that a similar control instruction mechanism may be employed to control the operation of any controller and/or the various components thereof that may be employed when implementing the embodiments of the present invention.

A further embodiment of the invention will now be described with reference to Figure 3. A video recorder 20 is shown to comprise a wireless module 21 that is capable to communicate with a base station 9, preferably via a Bluetooth™ wireless link. The video recorder or similar program replaying apparatus is adapted to detect a time code or any other indication in the recorded program. The detection of the indication triggers signalling from the video recorder (VCR) towards the base station 9, and further to a management unit 4 via a data network 6. In response the management unit 4 may generate and transmit predefined content to be presented to the user of the recorder. The embodiment enables interactive viewing of recorded programs, the difference to Figure 1 embodiment being that the triggering event may originate from the video recorder 20 that is typically at the location of the viewer 14 rather than from the broadcasting system 25.

The video recorder 20 may include in the transmission information that identifies the program and/or the user and so on. The presentation of the content to the user may occur either by means of the video recorder 20 (that is typically connected to a TV apparatus) or by a controller unit 10. The controller 10 may be similar to the ones described in connection with Figures 1 and 2.

It should be appreciated that the replaying device 20 may be any device capable of presenting a program on a storage media, such as on a video tape, digital video disk (DVD), on computer disk and so on and that the program to be shown via the TV screen does not necessarily need to be broadcast via a broadcasting system.

According to a further embodiment, the video recorder 20 or the TV apparatus and the controller 10 may communicate with each other over a wireless link 23 or via the base station 9. In the latter case the base station acts as an interfacing element between the various devices, such as 10 and 20 connected thereto.

According to an embodiment, the video recorder 20 or the TV apparatus is provided with means for detecting a predefined event from the broadcast signal. The means may comprise e.g. a dongle adapted to interpret the time-code from the broadcast signal. After detection of the event, a message is sent over the short range link either to the base station 9 or the controller 10. This embodiment enables an arrangement where it is not necessary to have a communication link (such as link 17 in Figure 1) between the broadcasting system 25 and the management unit 4. This is enabled even in instances where the user is viewing a program that is not recorded and/or replayed by the recorder 20, but is only received and immediately represented by the TV apparatus. In addition, the embodiment may enable presentation of the additional content by means of the TV apparatus, e.g. via an additional window opened on the screen thereof or by replacing the picture on the screen that is based on the broadcast signal by a picture that is based on data communicated from the management unit 4.

The messaging between the video recorder 20 and the base station 9 may also "hop" via the controller 10. Before the next hop, the user of the controller 10 may confirm that data is actually to be transmitted to the remote management unit 4 or to the video recorder 20 and/or the TV apparatus.

Figure 4 shows a preferred alternative for the wireless data communication interface. In the Figure 4 embodiment the data network 6 comprises a network that is capable of providing wireless packet switched data communication services, such as a General Packet Radio Service GPRS network, EDGE (enhanced data rate for GSM evolution) Mobile Data Network or an appropriate third generation telecommunication system such as a CDMA (code division multiple access) or TDMA (time division multiple access) based 3^{rd} generation telecommunication systems referred to as Universal Mobile Telecommunication System (UMTS). The GPRS network is described in more detail for example in 3GPP technical specification 3G TS 23.060 "General Packet Radio Service (GPRS); Service Description; Stage 2", January 2000. This document is incorporated herein by reference. A UMTS system that is based on a WCDMA (wideband code division multiple access) is described in more detail e.g. in UMTS related 3GPP technical specifications. Other suitable packet data telecommunication standards include, without limiting to these, IS-95, International Mobile Telecommunication System 2000 and i-Phone.

If the data communication is based on use of the public land line mobile networks (PLMN), then the base station 9 would be provided by means of a base station of the PLMN system instead of a short range radio link home base station of Figure 1. The controller 10 may be enabled to communicate directly with said PLMN base station 9. To enable this, the controller 10 may contain e.g. a GPRS transceiver module and an appropriate data processing unit, such as a Symbian EPOC micro-processor. The EPOC platform may be used because it supports Wireless Application Technology (WAP) and may be used with a Voice Over IP (VoIP) client. According to an alternative embodiment the short range radio link home base station is enabled to communicate with the base station of the PLMN systems.

Data rates up to 115kbit/s may be transmitted via the wireless interface in accordance with the present GPRS specifications, although the rate may be even more in the future applications. This enables wireless transmission of information at a speed that may be used in the embodiments. The introduction of GPRS (General Packet Radio Service) is one of the key steps in the evolution of today's 2^{nd} generation networks, such as the GSM (Global System for Mobile) to third generation systems, and the first commercial GPRS services are believed to be launched in near future. Following the arrival of GPRS, a further step in the bandwidth model is believed to occur with EDGE, with speeds of up to 384kbit/s being possible. The bandwidth potential of the 3^{rd} generation systems such as the UMTS or IMT 2000 (International Mobile Telecommunication System 2000) or IS-95 is in the first phase believed to be up to 2Mbit/s, and even more in the future. The inventor has found that the wireless packet switched services will enable the embodiments of the invention due to their capability of providing wireless high speed data connection that was not facilitated by the conventional circuit switched wireless connections.

An advantage of the packet switched services when compared to the conventional data services is that the packet switched service will always be available. The packet switched service are thus also referred to as connectionless services, as there will not be any communication circuits. Instead, each of the data packets is provided with an address and the individual packet are routed to the destination based on the address information. This means that the users are always connected and always on-line, and thus the management unit 4 will be easy and quick to access. Another benefit is that the user of the packet switched services may pay only for the content used and not the length of time connected. This enables a seamless access to a whole range of new and existing Internet Protocol (IP) based services. The viewers will be able to stay permanently logged-on to the interactive services and to send data to and to receive data the management unit with large file attachments in an instant. Since the viewers may be always connected and always on-line, the interactive services will be easy and quick to access and, with the capability to charge per data bit sent and received, customers will be able to pay only for the usage of the data transmission resources, e.g. per a data packet transmitted.

According to an embodiment, wireless application protocol (WAP) technology may be employed for the wireless transmission. For example, the display and selection buttons built into the controller 10 may also be based on the use of the wireless application protocol (WAP).

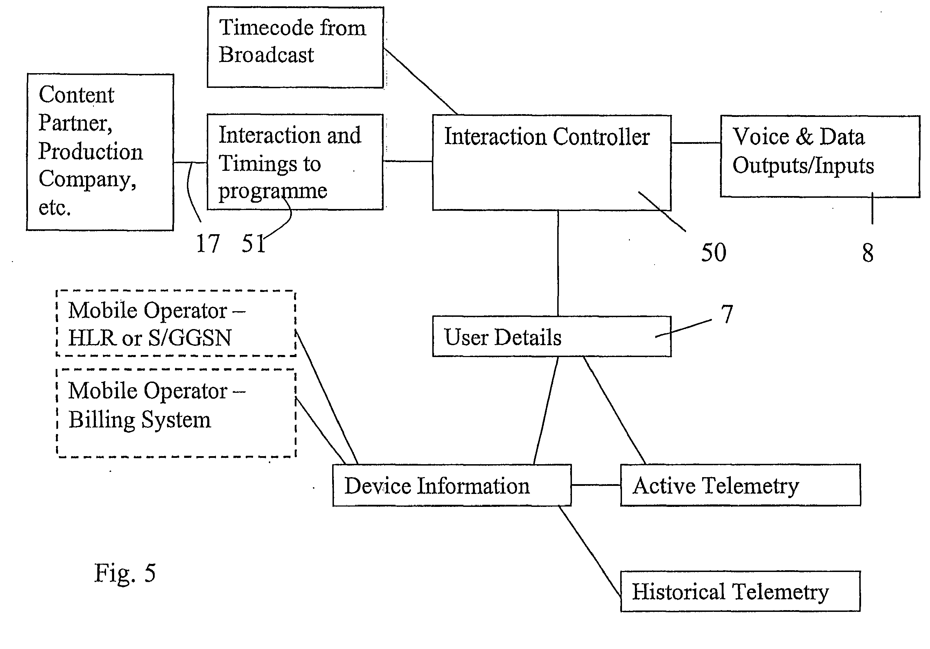

Figure 5 shows a possible architecture for the management unit. Interaction control function 50 controls interaction between a broadcasting system (via interface 17), a user device (via inputs/outputs 8) and a data base 7.

Information associated with the user and stored in a database of the management unit may be divided into a plurality of subcategories. Figure 6 shows a possibility for the division. More particularly, the information can be classified in categories such as personal details and user device information. The user device information may be divided further to historical telemetry and event telemetry.

The history information may comprise information such as the time when the device was last used and/or is typically used, length of time of the last and/or typical usage, total length of time used, types of programmes viewed and so on. Billing related information may also be stored, such as total billing, the bill accumulated for the present month, the bill for the last month/year and so on.

The event information i.e. active telemetry information may comprise e.g. the status of the user device, a programme tag, information associated with the quality of the signals and/or possible device tests.

The device information may be linked to elements of the provider of the data communication service used for communication towards the user device. For example, a communication may be provided between the management unit and a subscriber register (such as the home location register) or billing database of the operator.

Figure 5 shows also a function block 51 for interaction and timing with a program. Block 51 provides a function by means of which a content partner or production company can input the desired interaction script for their programme. The management unit may create and provide templates which will allow for non-technical persons to input this information using e.g. a WWW based graphical user interface. For example, the following fields may be included in an interaction and timings description entity for a program.

Main Fields: Programme ID (Each programme may retain a unique ID in the management unit); Scheduled Start Date; Scheduled Start Time; Event 1; Event 2; ...; Event N.

Each Event within the interaction may contain e.g. the following subfields:
Timing to Broadcast; Type (Data/Voice); Script; Expected Response (e.g. a Correct Answer); Out of Range Response (Incorrect Answer); Out of Range Script (a subscript allowing further interaction to allow the user to find the right answer).

The following is an example of interaction and timings based on use of the above fields:

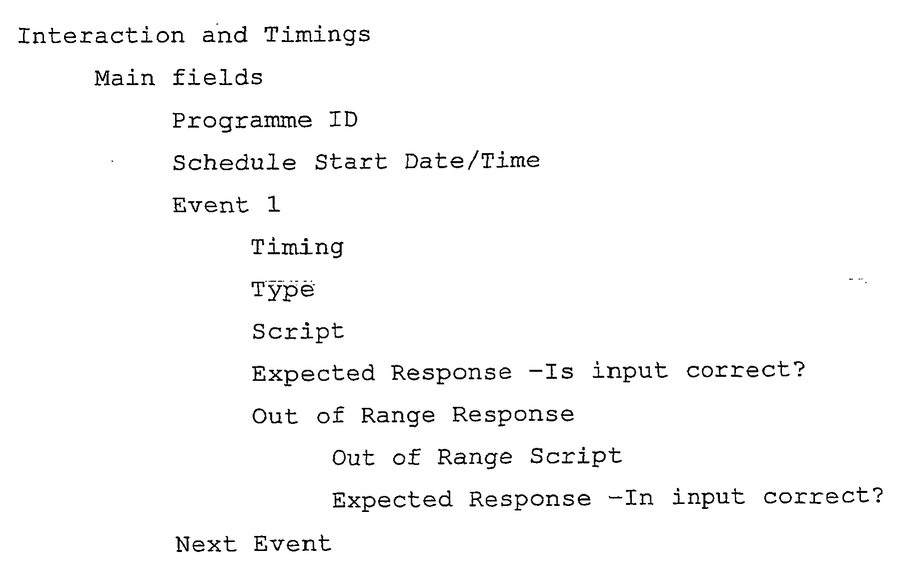

The user may also be able to customise the interactive service based e.g. on an HTML interface and a PC. In addition to receiving content and/or interacting with the programs, the user may also use the controller to other purposes, such as for ordering e.g. video-on-demand type services or goods/services offered by the broadcast program.

According to a further embodiment, the management unit 4 may be used for selective marketing towards the users of the system. For example, the unit 4 may trigger commercial or other content to be transported to a selected user based on the information of the user and also of the program he/she is currently viewing. A user who has registered as a fan of football club A would receive different information than a user who is registered as a club B fan, and so on.

According to a further embodiment, instead of being rather an entertainer or an information provider, the user device may be used as a companion or security device for the user thereof. The user device 10 may be adapted to be used as a reminder device under the control of the management unit 4. It may also comprise a "panic button" type function, which may be used e.g. by the elderly to get help. The panic button function may be activated by pressing a key or by a voice prompt.

It should be appreciated that whilst embodiments of the present invention have been described in relation to some specific types of programs and user equipment, embodiments of the present invention are applicable to any other suitable type of control equipment and programmes. For example, the programs may ask the viewers to express their opinion or give their vote in issues raised by the program.

It is also noted herein that while the above describes exemplifying embodiments of the invention, there are several variations and modifications which may be made to the disclosed solution without departing from the scope of the present invention as defined in the appended claims.

1. A method for presenting a program for a user, comprising:
   storing information that associates with the user in a remote Management unit;
   providing a program representation device with a program signal by means of a program signal broadcasting system;
   presenting the program to the user based on the program signal; and
   in response to a predefined event, transporting data between the remote management unit and a user device operable by the user while experiencing the program, the transportation occurring over a data network and a wireless data communication link between the data network and the user device, and said data associating with the program and being personalised based on said stored information.
2. A method as in 1, wherein data is transported from the remote management unit.
3. A method as in 1 or 2, wherein data is transported from the user device.
4. A method as in any of 1 to 3, wherein the user device comprises a portable controller.
5. A method as in any of 1 to 4, wherein the user device processes data packets received from or to be transported to the management unit.
6. A method as in any of 1 to 5, comprising a further step of storing data that associates with the program in the remote unit.
7. A method as claimed in any of 1 to 6, wherein a base station interfaces the wireless data communication link to the data network.
8. A method as in any of 1 to 7, wherein the wireless link comprises a short range radio link.
9. A method as in any of 1 to 8, wherein data is transported over the wireless link in an unlicensed radio frequency band.
10. A method as in 9, wherein the wireless link operates at a frequency band that is about 2.4 GHz.
11. A method as in any of 1 to 10, comprising transportation of data packets.
12. A method as in any of 1 to 11, wherein the wireless link employs frequency hopping.
13. A method as in 11 and 12, wherein the frequency used for the wireless link is changed between subsequent data packets of the packet data transmission.
14. A method as in any of 1 to 13, wherein the wireless link is based on a universal short range radio link protocol defined by Bluetooth^{™} Special Interest Group.
15. A method as in any of 1 to 14, wherein the data transported over the wireless link comprises control instructions for the user device.
16. A method as in any of 1 to 15, wherein the data transported between the management unit and the user device comprises additional information that associates with the program.
17. A method as in any of 1 to 16, wherein the data transported between the management unit and the user device comprises further content that associates with the program.
18. A method as in any of 1 to 17, wherein the data transportation between the user device and the remote management unit provides interaction between a viewer of a television program provided by a television system and the television system.
19. A method as in any of 1 to 18, wherein a packet data message is generated at the user device in response to an input by the user, the generated message is subsequently transported from the user device to the remote management unit, and in response to receiving the packet data message, the remote management unit generates a further packet data message to be transported to the user device.
20. A method as in any of 1 to 19, wherein the program includes at least one event to which the user may react by inputting a response into the user device.
21. A method as in any of 1 to 20, wherein the user device presents to the user an audio message based on data transported from the remote management unit.
22. A method as in any of 1 to 21, wherein the user device presents to the user a visual message based on data transported from the remote management unit.
23. A method as in any of 1 to 22, wherein one or more questions or tasks are presented to the user by the user device based on data transported from the remote management unit.
24. A method as in 23, wherein the user inputs response to said one or more questions or tasks, data based on the response is transported to the management unit, and the management unit generates ands transmits a feedback message regarding the response to the user device.
25. A method as in any of 1 to 24, comprising transportation of voice messages based on the voice over internet protocol (VOIP).
26. A method as in any of 1 to 25, wherein the data transportation is triggered by a predefined event that associates with the program.
27. A method as in any of 1 to 26, wherein the data transportation is triggered based on monitoring of a time-code that associates with recording media used for storing the program.
28. A method as in 27, wherein an element of the broadcasting system monitors for the time-code.
29. A method as in 27, wherein apparatus for replaying recorded programs monitors for the time-code.
30. A method as in 27, wherein the user device monitors for the time-code.
31. A method as in 26, wherein the event detection is based on detection of a predefined audio effect or visual effect in the program,
32. A method as in any of 1 to 31, wherein the user triggers the data transportation by inputting a speech message into the controller, the speech message is modified for the transmission over the wireless link and the data network, and the speech message is recognised in the remote management unit.
33. A method as in any of 1 to 32, wherein at least one element of the user device is operated based on data received from the remote management unit.
34. A method as in 33, wherein the at least one element is moved based on control instructions in the data message generated by the remote management unit.
35. A method as in any of 1 to 34, wherein the data network provides broadband data transportation services for the users thereof.
36. A method as in any of 1 to 35, wherein the data network comprises a third generation mobile telecommunication network.
37. A method as in any of 1 to 36, wherein the data network is based on at least one technology that is selected from the following possibilities: an Asynchronous Data Subscriber Line; an Integrated Services Digital Network; a General Packet Radio Service; Enhanced Data Rate for GSM Evolution; a Universal Mobile Telecommunication Service, IS-95; International Mobile Telecommunication System 2000.
38. A method as in any of 1 to 37, wherein data to be transported to the user device is personalised before the transportation.
39. A method as in any of 1 to 38, wherein the user modifies said information stored in the database.
40. A method as in any of 1 to 39, wherein data is routed to the user device based on said information stored in the database.
41. A method as in any of 1 to 40, wherein the information of the user stored in the management unit comprises information regarding at least one of the following personal characteristic: first name; last name; date of birth; place of birth; sex; colour of eyes; colour of hair; personal interests/preferences; hobbies; nationality; preferred language; health; address information; telephone number; email address.
42. A method as in any of 1 to 41, wherein information associated with usage of the user device is stored in the remote management unit.
43. A method as in any of 1 to 42, wherein the user device associates with a toy.
44. A method as in 42, wherein the toy is a cuddly toy, a dolly or the like.
45. A method as in any of 1 to 44, wherein the program is one of the following selection: an educational program; a game show, a documentary; a news program; a sports program; an entertainment program; a comedy; a drama; a movie; a children program.
46. A method for presenting a program for a user, comprising:
   storing information that associates with the user in a remote management unit;
   generating a program signal by means of replaying apparatus;
   providing a program representation device with the program signal;
   presenting the program to the user based on the program signal; and
   in response to a predefined event, transporting data between the remote management unit and a user device operable by the user while experiencing the program, the transportation occurring over a data network and a wireless data communication link between the data network and the user device, and said data associating with the program and being personalised based on said stored information.
47. A method as in 46, wherein the user is provided with interaction with a program stored in a recording medium at the time the user desires to experience the recorded program.
48. A method as in 46 or 47, wherein the user is provided with additional data associated with a program stored in a recording medium at the time the user desires to experience the recorded program.
49. A method as in any of 46 to 48, comprising further steps of broadcasting the program and recording the program by the replaying apparatus prior provision of the signal to the representation device.
50. A method as in any of 46 to 49, wherein the occurrence of the predefined event is monitored by the user device.
51. A method as in any of 46 to 50, wherein, in response to detection of the event, the user device transports a packet data message to the remote management unit.
52. A method as in any of 46 to 51, wherein the occurrence of the predefined event is monitored by the replaying apparatus.
53. A method as in 52, wherein, in response to detection of the event, the replaying apparatus transmits a notification to the user device.
54. A method as in any of 46 to 53, further comprising wireless communication between the user device and the replaying apparatus.
55. A method as in any of 46 to 54, wherein data is transmitted in hops between said apparatus for replaying recorded programs, the user device and the data network.
56. A method for providing interactivity for a viewer of a television program provided by a television system, comprising:
   displaying the television program to the viewer based on a signal from the television system;
   generating a packet data message that is to be transmitted between a remote management unit and a handheld controller operable by the viewer while viewing the program, wherein the management unit is connected to a packet switched data communication system and comprises processor means for processing and storage means for storing information that associates with the viewer and also information that associates with the program, and wherein the handheld controller is associated with a wireless module enabling a wireless data communication link between the controller and the packet switched communication network; and
   transmitting the packet data message between the wireless module and the packet switched telecommunication system via the wireless data communication link, wherein the packed data message and the signal from the television system are transported is separate communication systems.
57. A system for presenting a program, comprising:
   a program representation terminal for representing the program to a user;
   a broadcasting system for providing the program to the program representation terminal;
   a packet data communication network;
   a remote management unit that is connected to the packet data communication network, said remote management unit comprising a processor for processing data that associates with the program and a storage unit for storing information that associates with the user, said processor being adapted to personalise data that associates with the program based on said information that associates with the user; and
   a user device operable by the user while experiencing the program, the user device being adapted for communication over the packet data network by means of a wireless data communication link between the data communication network and the user device and to present information to the user based on data that is received via the wireless data communication link from the remote management unit while the user is experiencing the program.
58. A system as in 57, wherein the user device comprises a portable controller that is provided with means for presenting to the u!ser an audio message based on data received from the management unit.
59. A system as in 57 or 58, wherein the user device comprises a portable controller that is provided with means for presenting to the user a visual message based on data received from the management unit.
60. A system as in any of 57 to 59, comprising a base station for interfacing the wireless data communication link with the packet data network.
61. A system as in any of 57 to 60, wherein the wireless data communication link comprises a short range radio link.
62. A system as in any of 57 to 61, wherein the wireless link is adapted to employ frequency hopping.
63. A system as in 62, wherein the frequency of the wireless link is adapted to be changed between subsequent data packets.
64. A system as in any of 57 to 63, wherein the data transportation between the user device and the remote management unit provides interaction between a viewer of a television program provided by the broadcasting system and the television program.
65. A system as in any of 57 to 64, comprising monitoring means for monitoring for a predefined event.
66. A system as in 65, wherein the system is adapted to transport data between the management unit and the user device in response to detection of the predefined event by the monitoring means.
67. A system as in 65 or 66, wherein the predefined event is detected based on a time-code associated with the program.
68. A system as in any of 57 to 67, wherein the broadcasting system distributes the program signals to a plurality of representation terminals, the arrangement being such that each individual user of the plurality of terminals may receive data that has been personalised based on individual characteristic information stored in the remote management unit.
69. A system as in any of 57 to 68, wherein the packet data communication network comprises a third generation mobile telecommunication network standards.
70. A system as in any of 57 to 69, wherein the user device comprises speech recognition means.
71. A system as in any of 57 to 70, wherein the user device comprises at least one element that is controllable based on data received from the remote management unit.
72. A system as in 71, wherein the at least one element is moved based on control instructions in the data message generated by the remote management unit.
73. A system for presenting a program, comprising:
   a program representation terminal for representing the program to a user;
   program replaying apparatus for providing the program to the program representation terminal;
   a packet data communication network;
   a remote management unit that is connected to the packet data communication network, said remote management unit comprising a processor for processing data that associates with the program and a storage unit for storing information that associates with the user, said processor being adapted to personalise data that associates with the program based on the information that associates with the user; and
   a user device operable by the user while experiencing the program, the user device being adapted for communication over the packet data network by means of a wireless data communication link between the data communication network and the user device and to present information to the user based on data that is received via the wireless data communication link from the remote management unit while the user is experiencing the program.
80. A portable user device operable by a viewer of a television program while viewing the program presented by a television terminal adapted to receive a television signal from a television system, comprising:
   a communication module enabling data communication over a wireless interface between the portable user device and a packet data communication system, said packet data communication system being an independent system from the television system; and
   a controller adapted to process data received from or to be transported to a remote management unit that is connected to the packet data communication system, whereby the portable user device is adapted communicate data that associates with the television program and has been personalised based on the personal characteristics of the viewer over said wireless interface at the same time when the television program is presented to the viewer.
81. A portable user device as in 80, comprising audio means for representing audio messages.
82. A portable user device as in 80 or 81, comprising display means for representing visual messages.
83. A portable user device as in any of 80 to 82, comprising speech recognition means for receiving a user input.

## Claims

1. A system for presenting television programs, comprising:
a television terminal for displaying the television program based on a program signal;
a program signal provision system adapted to provide the television terminal with the program signal;
a data communication system;
a management unit connected to the data communication system, said management unit comprising
a database for storing personalised information associated with a viewer of the television program, and
a processor adapted to process data associated with the television program; and
a portable user device adapted to be operable by the viewer while viewing the television program, the portable user device comprising a communication module enabling data communication over a wireless interface between the portable user device and the data communication system,
whereby the portable user device and the management unit are adapted to communicate data that associates with the television program over said wireless interface and data communication system at the same time when the television program is presented to the viewer based on the program signal provided through the program signal provision system.

2. A system as claimed in claim 1, wherein the management unit and the portable user device are adapted to provide the viewer with a possibility to interact with the television program.

3. A system as claimed in claim 1 or 2, wherein the management unit and the portable user device are adapted to provide the viewer with further content that associates with the television program.

4. A system as claimed in any of claims 1 to 3, wherein the data communication is adapted to be triggered by a predefined event associated with the television program

5. A system as claimed in claim 4, wherein the predefined event comprises a time-code.

6. A system as claimed in any of claims 1 to 5, wherein the management unit is located in a remote location from the television terminal and the television signal provision system.

7. A method for providing interactivity for a viewer of a television program provided by a television system, comprising:
displaying the television program to the viewer based on a signal from the television system;
generating a packet data message that is to be transmitted between a remote management unit and a handheld controller operable by the viewer while viewing the program, wherein the management unit is connected to a packet switched data communication system and comprises processor means for processing and storage means for storing information that associates with the viewer and also information that associates with the program, and wherein the handheld controller is associated with a wireless module enabling a wireless data communication link between the controller and the packet switched communication network; and
transmitting the packet data message between the wireless module and the packet switched telecommunication system via the wireless data communication link, wherein the packed data message and the signal from the television system are transported is separate communication systems.

8. A method for presenting a program for a user, comprising:
storing information that associates with the user in a remote management unit;
providing a program representation device with a program signal by means of a program signal broadcasting system;
presenting the program to the user based on the program signal; and
in response to a predefined event, transporting data between the remote management unit and a user device operable by the user while experiencing the program, the transportation occurring over a data network and a wireless data communication link between the data network and the user device, and said data associating with the program and being personalised based on said stored information.

9. A method for presenting a program for a user, comprising:
storing information that associates with the user in a remote management unit;
generating a program signal by means of replaying apparatus;
providing a program representation device with the program signal;
presenting the program to the user based on the program signal; and
in response to a predefined event, transporting data between the remote management unit and a user device operable by the user while experiencing the program, the transportation occurring over a data network and a wireless data communication link between the data network and the user device, and said data associating with the program and being personalised based on said stored information.

10. A system for presenting a program, comprising:
a program representation terminal for representing the program to a user;
a broadcasting system for providing the program to the program representation terminal;
a packet data communication network;
a remote management unit that is connected to the packet data communication network, said remote management unit comprising a processor for processing data that associates with the program and a storage unit for storing information that associates with the user, said processor being adapted to personalise data that associates with the program based on said information that associates with the user; and
a user device operable by the user while experiencing the program, the user device being adapted for communication over the packet data network by means of wireless data communication link between the data communication network and the user device and to present information to the user based on data that is received via the wireless data communication link from the remote management unit while the user is experiencing the program.

11. A method as claimed in claim 8, wherein data is transported from the remote management unit.

12. A method as claimed in claim 8 or 11, wherein data is transported from the user device.

13. A method as claimed in any of claims 8, 11 and 12, wherein the user device comprises a portable controller.

14. A method as claimed in any of claims 8 and 11 to 13, wherein the user device processes data packets received from or to be transported to the management unit.

15. A method as claimed in any of claims 8 and 11 to 14, comprising a further step of storing data that associates with the program in the remote unit.

16. A method as claimed in any of claims 8 and 11 to 15, wherein a base station interfaces the wireless data communication link to the data network.

17. A method as claimed in any of claims 8 and 11 to 16, wherein the wireless link comprises a short range radio link.

18. A method as claimed in any of claims 8 and 11 to 16, wherein data is transported over the wireless link in an unlicensed radio frequency band.

19. A method as claimed in claim 18, wherein the wireless link operates at a frequency band that is about 2.4 GHz.

20. A method as claimed in any of claims 8 and 11 to 19, comprising transportation of data packets.

21. A method as claimed in any of claims 8 and 11 to 20, wherein the wireless link employs frequency hopping.

22. A method as claimed in claims 20 and 21, wherein the frequency used for the wireless link is changed between subsequent data packets of the packet data transmission.

23. A method as claimed in any of claims 8 and 11 to 22, wherein the wireless link is based on a universal short range radio link protocol defined by Bluetooth^{™} Special Interest Group.

24. A method as claimed in any of claims 8 and 11 to 23, wherein the data transported over the wireless link comprises control instructions for the user device.

25. A method as claimed in any of claims 8 and 11 to 24, wherein the data transported between the management unit and the user device comprises additional information that associates with the program.

26. A method as claimed in any of claims 8 and 11 to 25, wherein the data transported between the management unit and the user device comprises further content that associates with the program.

27. A method as claimed in any of claims 8 and 11 to 26, wherein the data transportation between the user device and the remote management unit provides interaction between a viewer of a television program provided by a television system and the television system.

28. A method as claimed in any of claims 8 and 11 to 27, wherein a packet data message is generated at the user device in response to an input by the user, the generated message is subsequently transported from the user device to the remote management unit, and in response to receiving the packet data message, the remote management unit generates a further packet data message to be transported to the user device.

29. A method as claimed in any of claims 8 and 11 to 28, wherein the program includes at least one event to which the user may react by inputting a response into the user device.

30. A method as claimed in any of claims 8 and 11 to 29, wherein the user device presents to the user an audio message based on data transported from the remote management unit.

31. A method as claimed in any of claims 8 and 11 to 30, wherein the user device presents to the user a visual message based on data transported from the remote management unit.

32. A method as claimed in any of claims 8 and 11 to 31, wherein one or more questions or tasks are presented to the user by the user device based on data transported from the remote management unit.

33. A method as claimed in claim 32, wherein the user inputs response to said one or more questions or tasks, data based on the response is transported to the management unit, and the management unit generates ands transmits a feedback message regarding the response to the user device.

34. A method as claimed in any of claims 8 and 11 to 33, comprising transportation of voice messages based on the voice over internet protocol (VOIP).

35. A method as claimed in any of claims 8 and 11 to 34, wherein the data transportation is triggered by a predefined event that associates with the program.

36. A method as claimed in any of claims 8 and 11 to 35, wherein the data transportation is triggered based on monitoring of a time-code that associates with recording media used for storing the program.

37. A method as claimed in claim 36, wherein an element of the broadcasting system monitors for the time-code.

38. A method as claimed in claim 36, wherein apparatus for replaying recorded programs monitors for the time-code.

39. A method as claimed in claim 36, wherein the user device monitors for the time-code.

40. A method as claimed in claim 35, wherein the event detection is based on detection of a predefined audio effect or visual effect in the program.

41. A method as claimed in any of claims 8 and 11 to 40, wherein the user triggers the data transportation by inputting a speech message into the controller, the speech message is modified for the transmission over the wireless link and the data network, and the speech message is recognised in the remote management unit.

42. A method as claimed in any of claims 8 and 11 to 41, wherein at least one element of the user device is operated based on data received from the remote management unit.

43. A method as claimed in claim 42, wherein the at least one element is moved based on control instructions in the data message generated by the remote management unit.

44. A method as claimed in any of claims 8 and 11 to 43, wherein the data network provides broadband data transportation services for the users thereof.

45. A method as claimed in any of claims 8 and 11 to 44, wherein the data network comprises a third generation mobile telecommunication network.

46. A method as claimed in any of claims 8 and 11 to 45, wherein the data network is based on at least one technology that is selected from the following possibilities: an Asynchronous Data Subscriber Line; an Integrated Services Digital Network; a General Packet Radio Service; Enhanced Data Rate for GSM Evolution; a Universal Mobile Telecommunication Service, IS-95; International Mobile Telecommunication System 2000.

47. A method as claimed in any of claims 8 and 11 to 46, wherein data to be transported to the user device is personalised before the transportation.

48. A method as claimed in any of claims 8 and 11 to 47, wherein the user modifies said information stored in the database.

49. A method as claimed in any of claims 8 and 11 to 48, wherein data is routed to the user device based on said information stored in the database.

50. A method as claimed in any of claims 8 and 11 to 49, wherein the information of the user stored in the management unit comprises information regarding at least one of the following personal characteristic: first name; last name; date of birth; place of birth; sex; colour of eyes; colour of hair; personal interests/preferences; hobbies; nationality; preferred language; health; address information; telephone number; email address.

51. A method as claimed in any of claims 8 and 11 to 50, wherein information associated with usage of the user device is stored in the remote management unit.

52. A method as claimed in any of claims 8 and 11 to 51, wherein the user device associates with a toy.

53. A method as claimed in claim 51, wherein the toy is a cuddly toy, a dolly or the like.

54. A method as claimed in any of claims 8 and 11 to 53, wherein the program is one of the following selection: an educational program; a game show, a documentary; a news program; a sports program; an entertainment program; a comedy; a drama; a movie; a children program.

55. A method as claimed in claim 9, wherein the user is provided with interaction with a program stored in a recording medium at the time the user desires to experience the recorded program.

56. A method as claimed in claim 9 or 55, wherein the user is provided with additional data associated with a program stored in a recording medium at the time the user desires to experience the recorded program.

57. A method as claimed in any of claims 9, 55 and 56, comprising further steps of broadcasting the program and recording the program by the replaying apparatus prior provision of the signal to the representation device.

58. A method as claimed in any of claims 9 and 55 to 57, wherein the occurrence of the predefined event is monitored by the user device.

59. A method as claimed in any of claims 9 and 55 to 58, wherein, in response to detection of the event, the user device transports a packet data message to the remote management unit.

60. A method as claimed in any of claims 9 and 55 to 59, wherein the occurrence of the predefined event is monitored by the replaying apparatus.

61. A method as claimed in claim 60, wherein, in response to detection of the event, the replaying apparatus transmits a notification to the user device.

62. A method as claimed in any of claims 9 and 55 to 61, further comprising wireless communication between the user device and the replaying apparatus.

63. A method as claimed in any of claims 9 and 55 to 62, wherein data is transmitted in hops between said apparatus for replaying recorded programs, the user device and the data network.

64. A system as claimed in claim 10, wherein the user device comprises a portable controller that is provided with means for presenting to the user an audio message based on data received from the management unit.

65. A system as claimed in claim 10 or 64, wherein the user device comprises a portable controller that is provided with means for presenting to the user a visual message based on data received from the management unit.

66. A system as claimed in any of claims 10, 64 and 65, comprising a base station for interfacing the wireless data communication link with the packet data network.

67. A system as claimed in any of claims 10 and 64 to 66, wherein the wireless data communication link comprises a short range radio link.

68. A system as claimed in any of claims 10 and 64 to 67, wherein the wireless link is adapted to employ frequency hopping.

69. A system as claimed in claim 68, wherein the frequency of the wireless link is adapted to be changed between subsequent data packets.

70. A system as claimed in any of claims 10 and 64 to 69, wherein the data transportation between the user device and the remote management unit provides interaction between a viewer of a television program provided by the broadcasting system and the television program.

71. A system as claimed in any of claims 10 and 64 to 70, comprising monitoring means for monitoring for a predefined event.

72. A system as claimed in claim 71, wherein the system is adapted to transport data between the management unit and the user device in response to detection of the predefined event by the monitoring means.

73. A system as claimed in claim 71 or 72, wherein the predefined event is detected based on a time-code associated with the program.

74. A system as claimed in any of claims 10 and 64 to 73, wherein the broadcasting system distributes the program signals to a plurality of representation terminals, the arrangement being such that each individual user of the plurality of terminals may receive data that has been personalised based on individual characteristic information stored in the remote management unit.

75. A system as claimed in any of claims 10 and 64 to 74, wherein the packet data communication network comprises a third generation mobile telecommunication network standards.

76. A system as claimed in any of claims 10 and 64 to 75, wherein the user device comprises speech recognition means.

77. A system as claimed in any of claims 10 and 64 to 76, wherein the user device comprises at least one element that is controllable based on data received from the remote management unit.

78. A system as claimed in claim 77, wherein the at least one element is moved based on control instructions in the data message generated by the remote management unit.

79. A system for presenting a program, comprising:
a program representation terminal for representing the program to a user;
program replaying apparatus for providing the program to the program representation terminal;
a packet data communication network;
a remote management unit that is connected to the packet data communication network, said remote management unit comprising a processor for processing data that associates with the program and a storage unit for storing information that associates with the user, said processor being adapted to personalise data that associates with the program based on the information that associates with the user; and
a user device operable by the user while experiencing the program, the user device being adapted for communication over the packet data network by means of a wireless data communication link between the data communication network and the user device and to present information to the user based on data that is received via the wireless data communication link from the remote management unit while the user is experiencing the program.

80. A portable user device operable by a viewer of a television program while viewing the program presented by a television terminal adapted to receive a television signal from a television system, comprising:
a communication module enabling data communication over a wireless interface between the portable user device and a packet data communication system, said packet data communication system being an independent system from the television system; and
a controller adapted to process data received from or to be transported to a remote management unit that is connected to the packet data communication system, whereby the portable user device is adapted communicate data that associates with the television program and has been personalised based on the personal characteristics of the viewer over said wireless interface at the same time when the television program is presented to the viewer.

81. A portable user device as claimed in claim 80, comprising audio means for representing audio messages.

82. A portable user device as claimed in claim 80 or 81, comprising display means for representing visual messages.

83. A portable user device as claimed in any of claims 80 to 82, comprising speech recognition means for receiving a user input.
